# FASCICULE DE BREVET EUROPEEN

(11) **EP 2 629 597 B1**
(45) Date de publication et mention de la délivrance du brevet: **29.03.2017**
(21) Numéro de dépôt: 11785722.7
(22) Date de dépôt: 17.10.2011
(51) Int. Cl.: A01B 63/00, A01D 67/00

(54) **MACHINE DE RECOLTE AVEC UN DISPOSITIF D'ALLEGEMENT**
ERNTEMASCHINE MIT EINER BELEUCHTUNGSVORRICHTUNG
HARVESTER HAVING A LIGHTENING DEVICE

(30) Priorité: 21.10.2010 FR 1058605
(43) Date de publication de la demande: 28.08.2013
(73) Titulaire: KUHN S.A., 67700 Saverne (FR)
(72) Inventeur: WALTER, René, F-57620 Goetzenbruck (FR); WALCH, Martin, F-67490 Dettwiler (FR); WATTRON, Bernard, F-67700 Haegen (FR)
(86) Numéro de dépôt international: PCT/FR2011/052418
(87) Numéro de publication internationale: WO 2012/052669

(56) Documents cités:
- EP-A1- 0 149 870
- EP-A1- 0 741 960
- FR-A1- 2 786 977
- FR-A1- 2 851 414
- FR-A1- 2 930 864

## Description

La présente invention se rapporte à une machine de récolte comportant :
- un châssis porteur comportant des montants latéraux sur lesquels sont articulés des pivots équipés de roues,
- des premiers vérins hydrauliques qui sont reliés aux montants latéraux et aux pivots,
- au moins un mécanisme de récolte qui est muni d'organes de coupe,
- un dispositif de suspension liant ledit mécanisme de récolte au châssis et autorisant un déplacement en hauteur dudit mécanisme de récolte par rapport au châssis et
- un dispositif d'allégement dudit mécanisme de récolte.

Sur les machines de récolte connues de ce genre, le dispositif d'allégement est généralement constitué par des ressorts de traction disposés entre le châssis et le dispositif de suspension. Ces ressorts exercent alors une traction vers le haut sur le dispositif de suspension et le mécanisme de récole et reportent ainsi une partie de leur poids sur le châssis. Cet allégement évite que le mécanisme de récolte ne repose trop lourdement sur le sol. Il peut ainsi facilement suivre les dénivellations du sol. Cela diminue le risque de maltraitance du tapis végétal qui pourrait résulter d'une trop forte pression dudit mécanisme sur le sol. La puissance à développer pour déplacer la machine durant le travail peut aussi être réduite. Enfin, l'usure des parties du mécanisme de récolte qui frottent sur le sol est moins rapide. Une machine de récolte du type précité est notamment connue du document FR 2 930 864.

Les ressorts de traction actuellement utilisés sur les machines de récolte sont volumineux et encombrants notamment lorsque la machine possède une grande largeur de travail. Sur ces machines il y a aussi un risque de coincement de produits coupés entre les spires de ces ressorts, ce qui pourrait nuire à leur fonctionnement. Enfin, leur coût est relativement élevé.

La présente invention a pour but de proposer un dispositif d'allégement différent et ne présentant pas les inconvénients précités.

A cet effet, une importante caractéristique de l'invention consiste en ce que le dispositif d'allégement est constitué par des seconds vérins hydrauliques qui sont articulés sur le châssis et sur le mécanisme de récolte ou son mécanisme de suspension et qui sont reliés par des circuits hydrauliques, d'une part, aux premiers vérins hydrauliques de manière à pouvoir être actionnés avec ces derniers et, d'autre part, à des accumulateurs hydropneumatiques.

Dans la position de travail de la machine, lesdits seconds vérins hydrauliques maintiennent le dispositif de récolte dans une position où il se situe sensiblement au niveau du sol. Le poids dudit dispositif de récolte est alors essentiellement reporté sur le châssis, ce qui lui permet de se déplacer facilement à la surface du sol. De plus, il peut aisément suivre les dénivellations grâce aux accumulateurs hydropneumatiques qui absorbent et restituent un certain volume d'huile du circuit hydraulique, ce qui permet aux seconds vérins hydrauliques de raccourcir ou de s'allonger en fonction des besoins. Ces mouvements sont en sus amortis par lesdits accumulateurs.

Les seconds vérins hydrauliques assurent également un relevage supplémentaire du dispositif de récolte par rapport au sol lors de la mise en position de transport. En effet, la liaison hydraulique entre les seconds vérins hydrauliques et les premiers vérins hydrauliques fait que ces derniers actionnent lesdits seconds vérins hydrauliques lorsqu'ils sont eux-mêmes actionnés pour lever le châssis par rapport aux roues. La combinaison des mouvements de levage de ces seconds et premiers vérins hydrauliques augmente d'une manière simple l'éloignement du dispositif de récolte du sol. Cela facilite son passage au-dessus d'éventuels obstacles qui pourraient se trouver au sol.

Enfin, il est possible de régler l'allégement du mécanisme de récolte à une valeur donnée, sans que l'allégement ainsi déterminé ne soit modifié par les opérations de relevage ou d'abaissement du châssis. D'autres caractéristiques et avantages de l'invention ressortiront de la description ci-après avec référence aux dessins annexés qui représentent, à titre d'exemple non limitatif, une forme de réalisation de la faucheuse selon l'invention.

Sur ces dessins :
- la figure 1 représente une vue de dessus d'une machine selon l'invention,
- la figure 2 représente une vue de côté, partiellement en coupe, de la machine en position de travail,
- la figure 3 représente une vue de côté, partiellement en coupe, de la machine en position de transport,
- les figures 4 et 5 représentent à plus grande échelle, des coupes d'un second vérin hydraulique selon l'invention, respectivement en position allongée au travail et en position raccourcie au transport,
- la figure 6 représente un schéma de l'hydraulique du dispositif d'allégement selon l'invention.

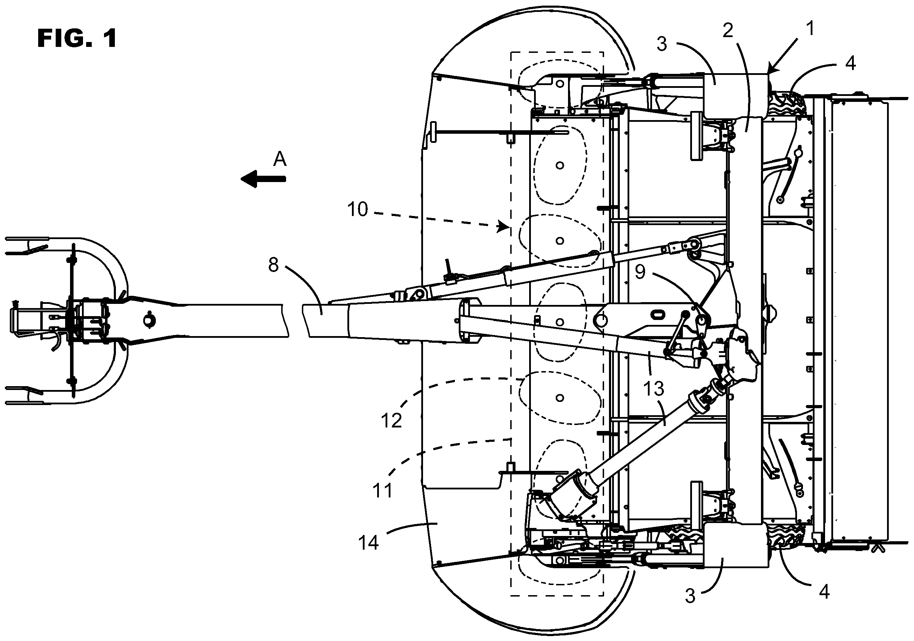

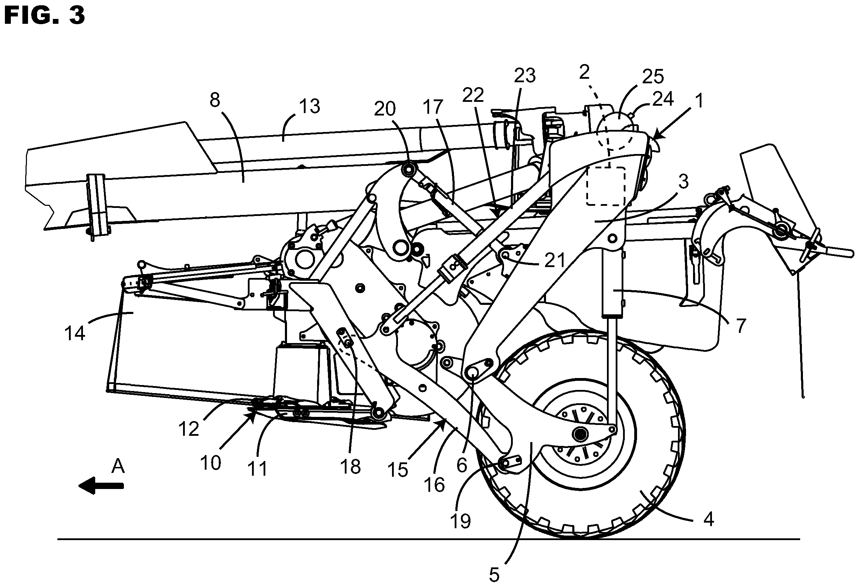

Telle qu'elle est représentée sur les figures 1 à 3, la machine de récolte selon l'invention est une faucheuse avec un châssis (1) possédant notamment une poutre porteuse transversale (2) et deux montants latéraux (3) auxquels sont reliées des roues (4). Chacune de ces roues (4) est montée sur un pivot (5) qui est articulé au moyen d'un axe (6) sur le montant latéral (3) correspondant. Entre chaque pivot (5) et le montant latéral (3) correspondant du châssis (1) est disposé un premier vérin hydraulique (7) permettant de déplacer ledit châssis (1) en hauteur par rapport aux roues (4). Un moyen de liaison (8) tel un timon est articulé sur un axe sensiblement vertical (9) dudit châssis (1). Ce moyen de liaison (8) permet d'accoupler la faucheuse à un véhicule tracteur (non représenté) qui assure à la fois le déplacement dans une direction d'avancement (A) et l'animation des différents organes de la faucheuse.

Le châssis (1) porte un mécanisme de récolte (10). Celui-ci est constitué par un carter (11) supportant des organes de coupe (12) notamment de végétaux. Ces organes de coupe (12) sont constitués par des disques munis de couteaux qui sont entraînés en rotation au moyen d'organes de transmission (13) allant du tracteur jusque dans le carter (11). Les organes de coupe (12) sont avantageusement entourés par un dispositif de protection (14). Le mécanisme de récolte (10) peut en sus comporter des moyens de traitement des produits fauchés tels que des rotors de conditionnement et/ou des dispositifs d'andainage. Le mécanisme de récolte (10) est relié au châssis (1) par l'intermédiaire d'un dispositif de suspension (15) autorisant un déplacement en hauteur dudit mécanisme de récolte (10) par rapport au châssis (1). Ce dispositif de suspension (15) se compose de deux bielles inférieures (16) et d'au moins une bielle supérieure (17). Les bielles inférieures (16) se situent sur les côtés latéraux de la machine et sont articulées sur le mécanisme de récolte (10) au moyen d'axes (18) et sur les pivots (5) du châssis (1) au moyen d'axes (19). La bielle supérieure (17) est plus éloignée du sol que les bielles inférieures (16) et est articulée sur le mécanisme de récolte (10) avec un axe (20) et sur le châssis (1) au moyen d'un axe (21). Ces axes d'articulation (18, 19, 20 et 21) sont tous sensiblement horizontaux et sensiblement perpendiculaires à la direction d'avancement (A).

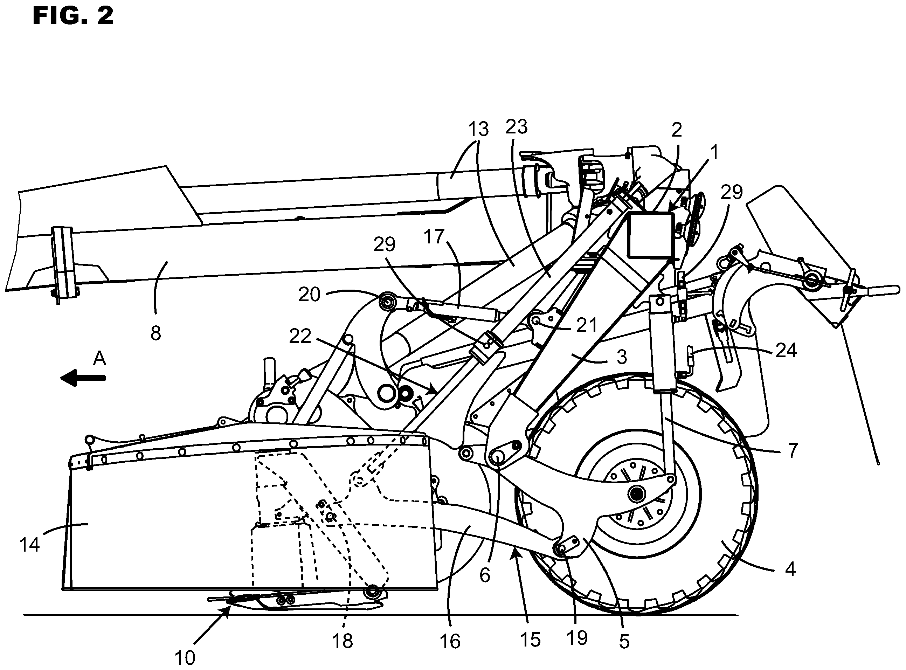

La faucheuse comporte aussi un dispositif d'allégement (22) du mécanisme de récolte (10). Il ressort des figures 2, 3 et 6 que ce dispositif d'allégement (22) est constitué par des seconds vérins hydrauliques (23) qui sont articulés sur le châssis (1) et sur le mécanisme de récolte (10) ou sur son mécanisme de suspension (15) et qui sont reliés par des circuits hydrauliques (24), d'une part, aux premiers vérins hydrauliques (7) de manière à pouvoir être actionnés par ces derniers et, d'autre part, à des accumulateurs hydropneumatiques (25) qui sont montés sur le châssis (1).

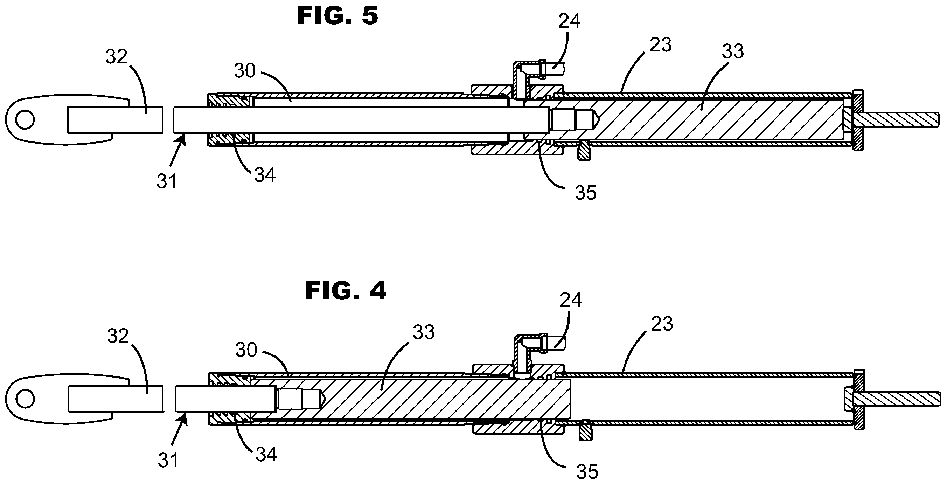

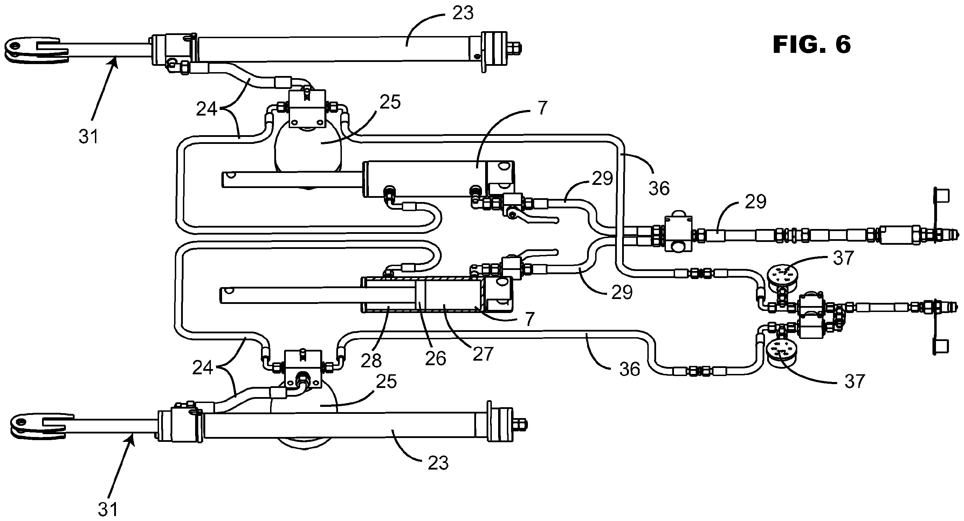

La machine comporte avantageusement deux premiers vérins hydrauliques (7) et deux seconds vérins hydrauliques (23). Comme cela ressort de la coupe partielle de la figure 6, chacun des premiers vérins hydrauliques (7) comprend un piston (26) partageant l'intérieur du vérin correspondant en une première chambre (27) et une deuxième chambre (28) contenant chacune de l'huile. Chaque première chambre (27) est reliée par un circuit hydraulique (29) à un dispositif de commande qui peut être situé sur le tracteur et qui peut être actionné de manière à ce que de l'huile soit injectée dans le circuit hydraulique (29) ou bien retirée de celui-ci.. Le dispositif de commande permet donc de régler la pression régnant dans le circuit hydraulique (29). Le circuit hydraulique (29) commande le relevage et l'abaissement du châssis (1) par rapport au sol. En effet, lorsque de l'huile est injectée dans chaque première chambre (27), la pression dans cette dernière augmente jusqu'à une valeur suffisamment élevée pour que le premier vérin hydraulique (7) s'allonge et que le châssis (1) s'élève par rapport au sol. Chaque premier vérin hydraulique (7) est commandé de la sorte lorsque la machine doit être mise en position de transport ou en position de passage d'andain, ou encore qu'elle doit franchir un obstacle particulièrement haut. Dans cette position, le châssis (1) est éloigné au maximum du sol, la chambre (27) est remplie d'huile tandis que la chambre (28) est sensiblement vidée. Lorsque le dispositif de commande est actionné de manière à ce que de l'huile retourne de chaque première chambre (27) vers un réservoir relié au circuit hydraulique (29), la pression dans chaque première chambre (27) diminue. Du fait de la force de gravité s'exerçant sur le châssis (1), le premier vérin hydraulique (7) raccourcit et le châssis (1) se rapproche du sol. Chaque premier vérin hydraulique (7) est commandé de la sorte lorsque la machine est mise en position de travail. Dans la position de travail, le premier vérin hydraulique (7) présente un allongement sensiblement minimal correspondant à un volume sensiblement minimal ou nul de la chambre (27). Dans la position de travail, le piston (26) repose donc sensiblement en butée contre le cylindre du premier vérin hydraulique (7).Comme cela ressort des figures 4 et 5, chaque second vérin hydraulique (23) comporte un corps long avec une seule chambre (30) fermée au moyen d'un piston (31) et destinée à recevoir de l'huile. Ledit piston (31) se compose essentiellement d'une tige (32) et d'une tête (33) dont le diamètre est inférieur à celui de la chambre (30). Ce piston (31) est guidé dans le corps du second vérin hydraulique (23) correspondant à deux emplacements ou paliers (34 et 35) qui restent fixes et qui sont munis de joints d'étanchéité. L'emplacement (34) est utilisé pour le guidage de la tige (32) tandis que l'emplacement (35) est utilisé pour le guidage de la tête (33). Ces emplacements sont relativement éloignés l'un de l'autre afin d'obtenir constamment un bon guidage. La tête (33) de ce piston (31) est sensiblement de même longueur ou a une longueur supérieure à celle de la chambre (30) dudit second vérin hydraulique (23). De ce fait, cette tête (33) ne pénètre pas totalement dans ladite chambre (30) et ne quitte pas son emplacement de guidage (35) lors de ses déplacements. La tête (33) est en sus totalement protégée par le corps du vérin correspondant.

Il ressort également des figures 4 à 6 que la deuxième chambre (28) de chaque premier vérin hydraulique (7) est reliée par un circuit hydraulique (24) à la chambre (30) d'un second vérin hydraulique (23).

Un des accumulateurs hydropneumatiques (25) est disposé sur chaque circuit hydraulique (24) reliant la deuxième chambre (28) d'un premier vérin hydraulique (7) à la chambre (30) d'un second vérin hydraulique (23). Ces accumulateurs hydropneumatiques (25), qui sont connus en soi, sont avantageusement fixés sur le châssis (1). La pression de l'huile dans chacun de ces circuits hydrauliques (24) est réglable de préférence d'une manière individuelle au moyen d'un circuit hydraulique (36) qui est relié au circuit hydraulique (24). De plus, le circuit hydraulique (36) est relié au dispositif de commande. Le dispositif de commande peut être actionné de manière à ce que de l'huile soit injectée dans le circuit hydraulique (36) ou bien soit retirée de celui-ci. Le dispositif de commande permet donc de régler la pression régnant dans le circuit hydraulique (36) et de fait celle régnant dans le circuit hydraulique (24). En sus, la pression dans le circuit hydraulique (36) est contrôlable à l'aide d'un manomètre (37) relié au circuit hydraulique (36).

Ainsi qu'il ressort clairement de la figure 6, les circuits hydrauliques (29) et (36) sont préférentiellement séparés. De préférence, le dispositif de commande permet de commander séparément les circuits hydrauliques (29) et (36).

Au travail, une augmentation de la pression de l'huile dans le circuit hydraulique (36) et donc dans le circuit hydraulique (24) correspondant est sans effet sur la longueur du premier vérin hydraulique (7) relié audit circuit hydraulique (24) puisque la chambre (27) dudit premier vérin hydraulique (7) est sensiblement vidée. Par contre, cette augmentation de la pression de l'huile génère une augmentation du volume de la chambre (30) du second vérin hydraulique (23) relié audit circuit hydraulique (24). Ainsi, ledit second vérin hydraulique (23) raccourcit, ce qui augmente l'allégement du mécanisme de récolte (10). L'allégement du mécanisme de récolte (10) peut être réglé précisément par l'utilisateur grâce aux manomètres (37). Ainsi, lors d'une campagne de fauchage, l'utilisateur peut ajuster la pression de l'huile dans les circuits hydrauliques (24) jusqu'à obtenir un allégement satisfaisant. Il lui suffit ensuite de relever les valeurs affichées par les manomètres (37). Lors d'une campagne de fauchage ultérieure, le même allégement peut être obtenu à nouveau en réglant les pressions d'huile de sorte que les manomètres (37) affichent les valeurs précédemment déterminées.

L'invention permet donc de s'affranchir d'un problème posé par les ressorts de traction, à savoir l'évolution dans le temps de la valeur de l'allégement due au coincement de produits coupés entre les spires de ces ressorts. En sus, l'invention autorise un réglage précis et reproductible de l'allégement. Au travail, le dispositif de récolte (10) est abaissé jusqu'au niveau du sol. Pour cela, chaque premier vérin hydraulique (7) est raccourci tandis que chaque second vérin hydraulique (23) est allongé. A cet effet, la première chambre (27) des premiers vérins hydrauliques (7) est vidée tandis que la deuxième chambre (28) se remplit d'huile provenant de la chambre (30) du second vérin hydraulique (23) en passant dans le circuit hydraulique (24). Dans cette position, les accumulateurs hydropneumatiques (25) peuvent absorber et restituer une certaine quantité d'huile desdits circuits hydrauliques (24), ce qui permet des variations de longueur des seconds vérins hydrauliques (23). Grâce à cela, tout le poids du dispositif de récolte ne repose pas sur le sol et il peut facilement se déplacer en hauteur pour suivre les dénivellations du sol.

Pour la mise en position de transport, de l'huile est injectée dans la première chambre (27) de chaque premier vérin hydraulique (7). Simultanément, de l'huile est repoussée de leur deuxième chambre (28) vers la chambre (30) de chaque second vérin hydraulique (23). Durant cette opération, lesdits premiers vérins hydrauliques (7) déplacent les pivots (5) par rapport aux roues (4) de sorte qu'ils soulèvent le châssis (1) et partiellement le dispositif de récolte (10). En même temps, les seconds vérins hydrauliques (23) exercent une traction sur le dispositif de récolte (10) par l'intermédiaire des tiges (32). Le dispositif de récolte (10) se déplace alors vers le haut par rapport au châssis (1) grâce au dispositif de suspension (15). Ledit dispositif de récolte (10) est ainsi amené dans une position de transport dans laquelle il est considérablement éloigné du sol. Dans cette position, la chambre (30) est remplie d'huile. Pour la mise en position de travail, les opérations de commande sont inversées.

Outre la grande amplitude de relevage du mécanisme de récolte par rapport au sol, obtenue par la combinaison du relevage du châssis (1) par rapport au sol et du rapprochement du mécanisme de récolte (10) par rapport au châssis (1), l'invention présente un autre avantage déterminant. Ainsi que mentionné plus haut, le circuit hydraulique (29) permettant le relevage du châssis (1), et le circuit hydraulique (36) permettant le réglage de l'allégement du mécanisme de récolte (1), sont séparés. Il est ainsi possible de régler l'allégement du mécanisme de récolte à une valeur donnée, sans que l'allégement ainsi déterminé ne soit modifié par les opérations de relevage ou d'abaissement du châssis. En pratique, l'utilisateur peut donc, après avoir réglé l'allégement pour une première parcelle à faucher, relever la machine en position de transport afin de se rendre sur une parcelle voisine, puis abaisser la machine en position de travail et retrouver l'allégement réglé pour la première parcelle. De même, le relevage de la machine pour franchir un obstacle présent sur la parcelle ne requiert pas d'ajuster l'allégement une fois la machine remise en position de travail. Il en résulte un gain de temps appréciable.

Ainsi qu'il ressort encore de la figure 6, le circuit hydraulique reliant les premiers vérins hydrauliques (7) aux seconds vérins hydrauliques (23) est d'une grande simplicité, ne comportant notamment ni vanne ni distributeur fréquemment employés sur les machines connues de ce genre.

L'invention n'est pas limitée au mode de réalisation décrit ci-dessus et représenté sur les figures annexées. Elle peut aussi s'appliquer à d'autres machines agricoles ayant un mécanisme de récolte se déplaçant au niveau du sol, c'est-à-dire des machines telles que des moissonneuses-batteuses ou des ensileuses. Des modifications sont possibles, notamment en ce qui concerne la constitution ou le nombre des divers éléments ou par substitution d'équivalents techniques, sans pour autant sortir du domaine de protection.

## Revendications

1. Machine de récolte comportant :
- un châssis (1) avec des montants latéraux (3) sur lesquels sont articulés des pivots (5) équipés de roues (4),
- des premiers vérins hydrauliques (7) qui sont reliés aux montants latéraux (3) et aux pivots (5),
- au moins un mécanisme de récolte (10) muni d'organes de coupe (12),
- un dispositif de suspension (15) liant ledit mécanisme de récolte (10) au châssis (1) et autorisant un déplacement en hauteur dudit mécanisme de récolte (10) par rapport au châssis (1),
- un dispositif d'allégement (22) dudit mécanisme de récolte (10),
***caractérisée par le fait que*** le dispositif d'allégement (22) est constitué par des seconds vérins hydrauliques (23) qui sont articulés sur le châssis (1) et sur le mécanisme de récolte (10) ou son mécanisme de suspension (15) et qui sont reliés par des premiers circuits hydrauliques (24), d'une part, aux premiers vérins hydrauliques (7) de manière à pouvoir être actionnés par ces derniers et, d'autre part, à des accumulateurs hydropneumatiques (25).

2. Machine selon la revendication 1, ***caractérisée par le fait que*** chacun des premiers vérins hydrauliques (7) comporte un piston (26) partageant l'intérieur du vérin correspondant en une première chambre (27) et une deuxième chambre (28) contenant de l'huile.

3. Machine selon la revendication 2, ***caractérisée par le fait* que** la première chambre (27) est reliée par un circuit hydraulique (29) à un dispositif de commande.

4. Machine selon la revendication 1, ***caractérisée par le fait* que** chacun des deuxièmes vérins hydrauliques (23) comporte un piston (31) fermant une chambre (30) contenant de l'huile.

5. Machine selon la revendication 2 ou 4, ***caractérisée par le fait* que** la deuxième chambre (28) de chaque premier vérin hydraulique (7) est reliée par un premier circuit hydraulique (24) à la chambre (30) d'un deuxième vérin hydraulique (23).

6. Machine selon la revendication 5, ***caractérisée par le fait* que** le premier circuit hydraulique (24) est relié à un deuxième circuit hydraulique (36) et que le deuxième circuit hydraulique (36) est relié au dispositif de commande.

7. Machine selon les revendications 3 et 6, ***caractérisée par le fait* que** les circuits hydrauliques (29) et (36) sont séparés et qu'ils peuvent être commandés séparément par le dispositif de commande.

8. Machine selon l'une quelconque des revendications précédentes, ***caractérisée par le fait* qu'**un accumulateur hydropneumatique (25) est disposé sur chaque premier circuit hydraulique (24) reliant la deuxième chambre (28) d'un premier vérin hydraulique (7) à la chambre (30) d'un deuxième vérin hydraulique (23).

9. Machine selon la revendication 4, ***caractérisée par le fait* que** le piston (31) de chaque deuxième vérin hydraulique (23) est guidé dans le corps dudit vérin hydraulique (23) à deux emplacements (34 et 35) qui restent fixes lorsque ledit piston (31) se déplace.

10. Machine selon la revendication 9, ***caractérisée par le fait* que** le piston (31) de chaque deuxième vérin hydraulique (23) comporte une tête (33) qui a sensiblement la même longueur que la chambre (30) dudit deuxième vérin hydraulique (23) ou une longueur supérieure.

11. Machine selon l'une quelconque des revendications 5 à 8, ***caractérisée par le fait que*** la pression de l'huile dans chaque premier circuit hydraulique (24) reliant la deuxième chambre (28) de chaque premier vérin hydraulique (7) à la chambre (30) d'un deuxième vérin hydraulique (23) est réglable.

12. Machine selon la revendication 9 ou 10, ***caractérisée par le fait que*** chaque deuxième vérin hydraulique (23) comporte une tête (33) dont le diamètre est inférieur à celui de la chambre (30) du deuxième vérin hydraulique (23) correspondant.

13. Machine selon l'une quelconque des revendications précédentes, ***caractérisée par le fait* qu'**elle comporte au moins une position de travail dans laquelle la chambre (27) est sensiblement vidée de son huile ainsi qu'au moins une position de transport dans laquelle la chambre (28) est sensiblement vidée de son huile et la chambre (30) est remplie d'huile.

## Patentansprüche

1. Erntemaschine mit
- einem Rahmen (1) mit Seitenständern (3), an denen mit Rädern (4) ausgestattete Drehstangen (5) angelenkt sind,
- ersten Hydraulikzylindern (7), die mit den Seitenständern (3) und den Drehstangen (5) verbunden sind,
- mindestens einer Erntevorrichtung (10), die mit Schneidelementen (12) ausgestattet ist,
- einer Aufhängevorrichtung (15), welche die Erntevorrichtung (10) mit dem Rahmen (1) verbindet und eine höhenmäßige Verschiebung der Erntevorrichtung (10) in Bezug auf den Rahmen (1) gestattet,
- einer Entlastungsvorrichtung (22) der Erntevorrichtung (10),
***dadurch gekennzeichnet,* dass** die Entlastungsvorrichtung (22) von zweiten Hydraulikzylindern (23) gebildet wird, die am Rahmen (1) und an der Erntevorrichtung (10) oder ihrer Aufhängevorrichtung (15) angelenkt sind und die über erste Hydraulikkreise (24) einerseits mit den ersten Hydraulikzylindern (7) verbunden sind, um von diesen betätigt werden zu können, und andererseits mit hydropneumatischen Speichern (25).

2. Maschine nach Anspruch 1, ***dadurch gekennzeichnet,* dass** jeder der ersten Hydraulikzylinder (7) einen Kolben (26) umfasst, der den Innenraum des entsprechenden Zylinders in eine erste Kammer (27) und eine zweite Kammer (28) teilt, die Öl enthalten.

3. Maschine nach Anspruch 2, ***dadurch gekennzeichnet,* dass** die erste Kammer (27) über einen Hydraulikkreis (29) mit einer Betätigungsvorrichtung verbunden ist.

4. Maschine nach Anspruch 1, ***dadurch gekennzeichnet,* dass** jeder der zweiten Hydraulikzylinder (23) einen Kolben (31) umfasst, der eine Kammer (30) schließt, die Öl enthält.

5. Maschine nach Anspruch 2 oder 4, ***dadurch gekennzeichnet,* dass** die zweite Kammer (28) von jedem ersten Hydraulikzylinder (7) über einen ersten Hydraulikkreis (24) mit der Kammer (30) eines zweiten Hydraulikzylinders (23) verbunden ist.

6. Maschine nach Anspruch 5, ***dadurch gekennzeichnet,* dass** der erste Hydraulikkreis (24) mit einem zweiten Hydraulikkreis (36) verbunden ist und dass der zweite Hydraulikkreis (36) mit der Betätigungsvorrichtung verbunden ist.

7. Maschine nach Anspruch 3 und 6, ***dadurch gekennzeichnet,* dass** die Hydraulikkreise (29) und (36) getrennt sind und dass sie von der Betätigungsvorrichtung getrennt gesteuert werden können.

8. Maschine nach irgend einem der vorhergehenden Ansprüche, ***dadurch gekennzeichnet,* dass** ein hydropneumatischer Speicher (25) auf jedem ersten Hydraulikkreis (24) angeordnet ist, der die zweite Kammer (28) eines ersten Hydraulikzylinders (7) mit der Kammer (30) eines zweiten Hydraulikzylinders (23) verbindet.

9. Maschine nach Anspruch 4, ***dadurch gekennzeichnet,* dass** der Kolben (31) von jedem zweiten Hydraulikzylinder (23) im Körper des Hydraulikzylinders (23) an zwei Stellen (34 und 35) geführt wird, die unbewegt bleiben, wenn sich der Kolben (31) verschiebt.

10. Maschine nach Anspruch 9, ***dadurch gekennzeichnet,* dass** der Kolben (31) von jedem zweiten Hydraulikzylinder (23) einen Kopf (33) umfasst, der im Wesentlichen die gleiche Länge wie die Kammer (30) des zweiten Hydraulikzylinders (23) oder eine größere Länge aufweist.

11. Maschine nach irgend einem der Ansprüche 5 bis 8, ***dadurch gekennzeichnet,* dass** der Öldruck in jedem ersten Hydraulikkreis (24), der die zweite Kammer (28) von jedem ersten Hydraulikzylinders (7) mit der Kammer (30) eines zweiten Hydraulikzylinder (23) verbindet, einstellbar ist.

12. Maschine nach Anspruch 9 oder 10, ***dadurch gekennzeichnet,* dass** jeder zweite Hydraulikzylinder (23) einen Kopf (33) umfasst, dessen Durchmesser kleiner ist als jener der Kammer (30) des entsprechenden zweiten Hydraulikzylinders (23).

13. Maschine nach irgend einem der vorhergehenden Ansprüche, ***dadurch gekennzeichnet,* dass** sie mindestens eine Arbeitsstellung umfasst, in der die Kammer (27) im Wesentlichen von Öl entleert ist, sowie mindestens eine Transportstellung, in der die Kammer (28) im Wesentlichen von Öl entleert und die Kammer (30) mit Öl gefüllt ist.

## Claims

1. Harvesting machine comprising:
- a frame (1) with lateral uprights (3) on which are articulated pivots (5) equipped with wheels (4),
- first hydraulic jacks (7) which are connected to the lateral uprights (3) and to the pivots (5),
- at least one harvesting mechanism (10) provided with cutting elements (12),
- a suspension device (15) connecting the said harvesting mechanism (10) to the frame (1) and allowing a vertical displacement of the said harvesting mechanism (10) with respect to the frame (1),
- a lightening device (22) of the said harvesting mechanism (10),
***characterised in that*** the lightening device (22) is constituted by second hydraulic jacks (23) which are articulated on the frame (1) and on the harvesting mechanism (10) or its suspension mechanism (15) and which are connected by first hydraulic circuits (24), on the one hand, to the first hydraulic jacks (7) so as to be able to be actuated by these latter and, on the other hand, to hydropneumatic accumulators (25).

2. Machine according to Claim 1, ***characterizes in that*** each of the first hydraulic jacks (7) comprises a piston (26) dividing the interior of the corresponding jack into a first chamber (27) and a second chamber (28) containing oil.

3. Machine according to Claim 2, ***characterized in that*** the first chamber (27) is connected by a hydraulic circuit (29) to a control device.

4. Machine according to Claim 1, ***characterized in that*** each of the second hydraulic jacks (23) comprises a piston (31) closing a chamber (30) containing oil.

5. Machine according to Claim 2 or 4, ***characterized in that*** the second chamber (28) of each first hydraulic jack (7) is connected by a first hydraulic circuit (24) to the chamber (30) of a second hydraulic jack (23).

6. Machine according to Claim 5, ***characterized in that*** the first hydraulic circuit (24) is connected to a second hydraulic circuit (36) and that the second hydraulic circuit (36) is connected to the control device.

7. Machine according to Claims 3 and 6, ***characterized in that*** the hydraulic circuits (29) and (36) are separate and can be controlled separately by the control device.

8. Machine according to any one of the preceding Claims, ***characterized in that*** a hydropneumatic accumulator (25) is arranged on each first hydraulic circuit (24) connecting the second chamber (28) of a first hydraulic jack (7) to the chamber (30) of a second hydraulic jack (23).

9. Machine according to Claim 4, ***characterizes in that*** the piston (31) of each second hydraulic jack (23) is guided in the body of the said hydraulic jack (23) at two sites (34 and 35) which remain fixed when the said piston (31) moves.

10. Machine according to Claim 9, ***characterized in that*** the piston (31) of each second hydraulic jack (23) comprises a head (33) which has substantially the same length as the chamber (30) of the said second hydraulic jack (23) or a greater length.

11. Machine according to any one of Claims 5 to 8, ***characterized in that*** the pressure of the oil in each first hydraulic circuit (24) connecting the second chamber (28) of each first hydraulic jack (7) to the chamber (30) of a second hydraulic jack (23) is adjustable.

12. Machine according to Claim 9 or 10, ***characterized in that*** each second hydraulic jack (23) comprises a head (33), the diameter of which is less than that of the chamber (30) of the corresponding second hydraulic jack (23).

13. Machine according to any one of the preceding Claims, ***characterized in that*** it comprises at least one work position in which the chamber (27) is substantially emptied of its oil and also at least one transport position in which the chamber (28) is substantially emptied of its oil and the chamber (30) is filled with oil.
